# EUROPÄISCHE PATENTSCHRIFT

(11) **EP 1 444 078 B1**
(45) Veröffentlichungstag und Bekanntmachung des Hinweises auf die Patenterteilung: **14.11.2007**
(21) Anmeldenummer: 02774700.5
(22) Anmeldetag: 11.10.2002
(51) Int. Cl.: B29C 33/20, B29C 44/58

(54) **PRESSE FÜR HARTSCHAUMPLATTEN**
PRESS FOR HARD FOAM PLATES
PRESSE POUR PANNEAUX EN MOUSSE DURE

(30) Priorität: 23.10.2001 DE 10152134
(43) Veröffentlichungstag der Anmeldung: 11.08.2004
(73) Patentinhaber: Hennecke GmbH, 51379 Leverkusen (DE)
(72) Erfinder: RAMCKE, Carsten, 48712 Gescher (DE)
(74) Vertreter: Weismantel, Lothar
(86) Internationale Anmeldenummer: PCT/EP2002/011403
(87) Internationale Veröffentlichungsnummer: WO 2003/035352

(56) Entgegenhaltungen:
- DE-A- 2 810 007
- US-A- 3 161 911
- US-A- 6 113 382

## Beschreibung

Die Erfindung betrifft eine Presse oder auch Schließvorrichtung für Hartschaumplatten, insbesondere für Sandwichplatten aus Polyurethan-Hartschaumkern mit zwei äußeren Deckschichten aus flexiblem oder auch starrem Material wie Aluminium, Stahl oder Kunststoff. Dabei hat die Maschine ein System, mit dem der Abstand zwischen den Pressenplatten vorprogrammierbar stufenlos eingestellt und der entstehende Pressdruck nach dem Schäumen durch einen Kurzhubzylinder oder ein aufblasbares Kissen abgebaut werden kann.

Sandwichplatten aus Polyurethan-Hartschaum mit äußeren Deckschichten werden oftmals auf Pressen hergestellt, die in anderen Industriezweigen als echte Pressen verwendet werden. Das bedeutet, dass diese Maschinen ihre Hubbegrenzung durch das Werkstück oder die Pressform erhalten. Bei der Herstellung von Hartschaumplatten muss jedoch der Abstand zwischen den Pressenplatten vorher fixiert werden, damit der entstehende Schaumdruck gegen eine definierte Ebene aufsteigen kann, die genau fixiert ist. Bei Serienelementen, beispielsweise bei der Produktion von Platten für Kühlcontainer wird die Gießform so gestaltet, dass sie gleichzeitig als Begrenzung für die bewegte Pressenplatte dient. Bei derartigen Produktionen ist diese Methode sehr wirtschaftlich, weil diese Platten immer die gleiche Stärke haben, oder die Serie so groß ist, dass eine Umstellung auf eine andere Plattenstärke und damit Verwendung einer anderen Form nur selten vorkommt.

Eine andere Methode ist bekannt, bei welcher der untere Pressentisch mittels Hydraulikzylinder gegen Anschläge gefahren wird, die je nach gewünschter Plattenstärke ausgewechselt werden. Dabei muss jedoch das Hydrauliksystem eine wesentlich höhere Presskraft aufbringen als der Schäumdruck erzeugen kann, um ein unvorhergesehenes Öffnen der Presse zu vermeiden. Auch besteht bei diesem System die Gefahr, dass durch menschlichen Fehler an einigen oder auch nur einer Stelle die Distanzstücke vergessen werden, was nicht nur zu einem Produktausfall sondern insbesondere zu einem Maschinenschaden führen muss.

Um ein schnelles Einstellen des Pressenplattenabstandes und damit der Sandwichplattenstärke zu ermöglichen, ist eine Maschine entwickelt worden, bei welcher der untere Pressentisch über Hydraulikzylinder gegen Anschläge gefahren wird, die mittels synchron angetriebene Gewindespindeln in Position gebracht werden. Auch hierbei ist ein Hydrauliksystem erforderlich, bei dem die Bewegungszylinder die ganze Presskraft aufbringen müssen.

Ein Hersteller in USA hat eine Maschine entwickelt, bei der die Pressenplatte ausschließlich mittels Gewindespindeln in Position gefahren wird. Damit ist eine stufenlose Einstellung der Hubhöhe und damit Stärke der Sandwichplatte möglich. Diese Maschine hat jedoch den Nachteil, dass die selbsthemmenden Gewindespindeln durch den Schäumdruck ein sehr hohes Öffnungsmoment verlangen, insbesondere, weil die Spindeln mit vorgeschaltetem Schneckengetriebe einen Wirkungsgrad von ca. 20 % nicht überschreiten.

Eine weitere Presse mit Gewindespindel ist aus das gattungsbildenden DE-A-2810007 bekannt.

Bei neuesten Entwicklungen wird versucht, die Hydraulikhubzylinder einzeln derartig anzusteuern, dass eine exakte Positionierung der Pressenplatte ohne irgendwelche Hilfsmittel wie Anschläge oder ähnliches möglich ist. Diese Entwicklungen sind jedoch bisher noch an dem hohen technischen Aufwand und an der Forderung der Sandwichproduzenten nach sehr engen Dickentoleranzen gescheitert.

Der Erfindung liegt die Aufgabe zugrunde, eine Presse zur Herstellung insbesondere von Polyurethansandwichplatten zur Verfügung zu stellen, mit der jede Sandwichplattenstärke ohne lange Umstellzeiten hergestellt werden kann und die engen Dickentoleranzen auch über eine große Fläche gewährleistet sind. Außerdem sollte sichergestellt werden, dass die durch den Schäumdruck freiwerdende Energie nicht unnötigerweise durch die Hubhydraulik schon einzubringen ist, sondern dass ein selbsthemmendes Schließsystem mit geringem Energieaufwand den Schäumdruck abbaut.

Die Erfindung betrifft eine Presse für Hartschaumplatten enthaltend
einen Rahmen,
eine im Rahmen fest angeordnete Pressenplatte (1) und eine im Rahmen beweglich angeordnete Pressenplatte (3),
mindestens eine Gewindespindel (4), die zwischen der beweglichen Pressenplatte (3) und dem Rahmen angeordnet ist,
dadurch gekennzeichnet, dass die Presse weiterhin mindestens einen hydraulisch bewegbaren Hubzylinder (5), der zwischen der beweglichen Pressenplatte (3) und dem Rahmen angeordnet ist,
sowie mindestens einen hydraulisch bewegbaren Kurzhubzylinder (6), der zwischen der beweglichen Pressenplatte (3) und der Gewindespindel (4) angeordnet ist, und dessen Bewegung durch Anschläge begrenzt ist, enthält.

Die Erfindung betrifft weiterhin eine Presse für Hartschaumplatten enthaltend
einen Rahmen,
eine im Rahmen fest angeordnete Pressenplatte (1) und eine im Rahmen beweglich angeordnete Pressenplatte (3),
mindestens eine Gewindespindel (4), die zwischen der beweglichen Pressenplatte (3) und dem Rahmen angeordnet ist,
dadurch gekennzeichnet, dass die Presse weiterhin mindestens einen hydraulisch bewegbaren Hubzylinder (5), der zwischen der beweglichen Pressenplatte (3) und dem Rahmen angeordnet ist, enthält,
und dass die bewegliche Pressenplatte (3) aus einer ersten und einer zweiten Pressenplatte und einem dazwischen angeordneten pneumatisch oder hydraulisch befüllbaren Kissen aufgebaut ist, wobei die erste und die zweite Pressenplatte gegeneinander bewegbar sind und wobei deren Bewegung durch innere Anschläge begrenzt ist.

Die Erfindung betrifft auch ein Verfahren zur Herstellung von Polyurethan-Hartschaumplatten, bei dem man eine Presse gemäß Anspruch 1 einsetzt und bei dem man
a) den Kurzhubzylinder (6) bis zu seinem Anschlag hydraulisch ausfährt und die Gewindespindel (4) und den Hubzylinder (5) in Richtung der fest angeordneten Pressenplatte (1) ausfährt, so dass sich die bewegliche Pressenplatte (3) auf die fest angeordnete Pressenplatte (1) zubewegt, wobei man die Bewegung der Gewindespindel (4) und des Hubzylinders (5) unterbricht, wenn ein vorgegebener Abstand zwischen der fest angeordneten Pressenplatte (1) und der beweglichen Pressenplatte (3) erreicht wird, und anschließend
b) flüssiges Polyurethan-Reaktionsgemisch in eine Form (9) einbringt und die Form (9) zwischen der fest angeordneten Pressenplatte (1) und der beweglichen Pressenplatte (3) anordnet und das flüssige Polyurethan-Reaktionsgemisch aufschäumen und aushärten lässt, und anschließend
c) den Kurzhubzylinder (6) wieder einfährt und anschließend
d) die Gewindespindel (4) und den Hubzylinder (5) wieder zurückbewegt.

Die Erfindung betrifft auch ein Verfahren zur Herstellung von Polyurethan-Hartschaumplatten, bei dem man eine Presse gemäß Anspruch 2 einsetzt und bei dem man
a) das Kissen zwischen der ersten und der zweiten Pressenplatte der beweglichen Pressenplatte (3) hydraulisch oder pneumatisch befüllt, so dass sich die erste und die zweite Pressenplatte bis zu den inneren Anschlägen auseinander bewegen und die Gewindespindel (4) und den Hubzylinder (5) in Richtung der fest angeordneten Pressenplatte (1) ausfährt, so dass sich die bewegliche Pressenplatte (3) auf die fest angeordnete Pressenplatte (1) zubewegt, wobei man die Bewegung der Gewindespindel (4) und des Hubzylinders (5) unterbricht, wenn ein vorgegebener Abstand zwischen der fest angeordneten Pressenplatte (1) und der beweglichen Pressenplatte (3) erreicht wird, und anschließend
b) flüssiges Polyurethan-Reaktionsgemisch in eine Form (9) einbringt und die Form (9) zwischen der fest angeordneten Pressenplatte (1) und der beweglichen Pressenplatte (3) anordnet und das flüssige Polyurethan-Reaktionsgemisch aufschäumen und aushärten lässt, und anschließend
c) das in Schritt a) hydraulisch oder pneumatisch befüllte Kissen wenigstens teilweise wieder entleert und anschließend
d) die Gewindespindel (4) und den Hubzylinder (5) wieder zurückbewegt.

Dabei ist zum Abbau des Schäumdrucks ein Hub von ca. 1 mm in Schritt c) ausreichend.

Dabei wird der vorgegebene Abstand zwischen der fest angeordneten Pressenplatte und der beweglichen Pressenplatte durch die gewünschte Dicke der Polyurethan-Hartschaumplatten bestimmt.

Vorzugsweise wird das Verfahren so betrieben, dass man 50 bis 99 % der für die Bewegung der beweglichen Pressenplatte erforderlichen Leistung durch die Hubzylinder und 1 bis 50 % der erforderlichen Leistung durch die Gewindespindeln aufbringt.

Die Erfindung betrifft insbesondere eine Presse für Hartschaumplatten mit stufenloser Einstellung des Abstandes zwischen den beiden Pressenplatten, insbesondere für Sandwichplatten mit einer oberen und unteren Deckschicht und dazwischen befindlichem Kern aus Polyurethan-Hartschaum, dadurch gekennzeichnet,
dass die bewegliche Pressenplatte von Gewindespindeln gehoben und gesenkt wird und
zwischen den Gewindespindeln und der Pressenplatte hydraulisch betätigte Zylinder angebracht sind, die nach dem Schäumvorgang den unter Druck stehenden Raum zwischen oberer und unterer Pressenplatte entspannen und somit eine andererseits erforderliche hohe Losbrechkraft für die selbsthemmenden Gewindespindeln unnötig macht oder
dass die bewegliche Pressenplatte von Gewindespindeln gehoben und gesenkt wird und in der beweglichen Pressenplatte ein Luftkissen mit einem durch innere Anschläge begrenzten Hub installiert ist und auf diese Weise den unter Druck stehenden Raum zwischen oberer und unterer Pressenplatte entspannt.

Die Presse und das Verfahren zur Herstellung der Polyurethan-Hartschaumplatten wird nachstehend anhand der Figuren beispielhaft näher erläutert.

Es zeigen
- Figur 1: eine schematische Darstellung der Presse gemäß Anspruch 1, in der die Presse geschlossen ist;
- Figur 2: eine schematische Darstellung der Presse gemäß Anspruch 1, in der die Presse geöffnet ist;
- Figur 3: eine Seitenansicht der Presse gemäß Anspruch 1, in der die4 Presse geöffnet ist.

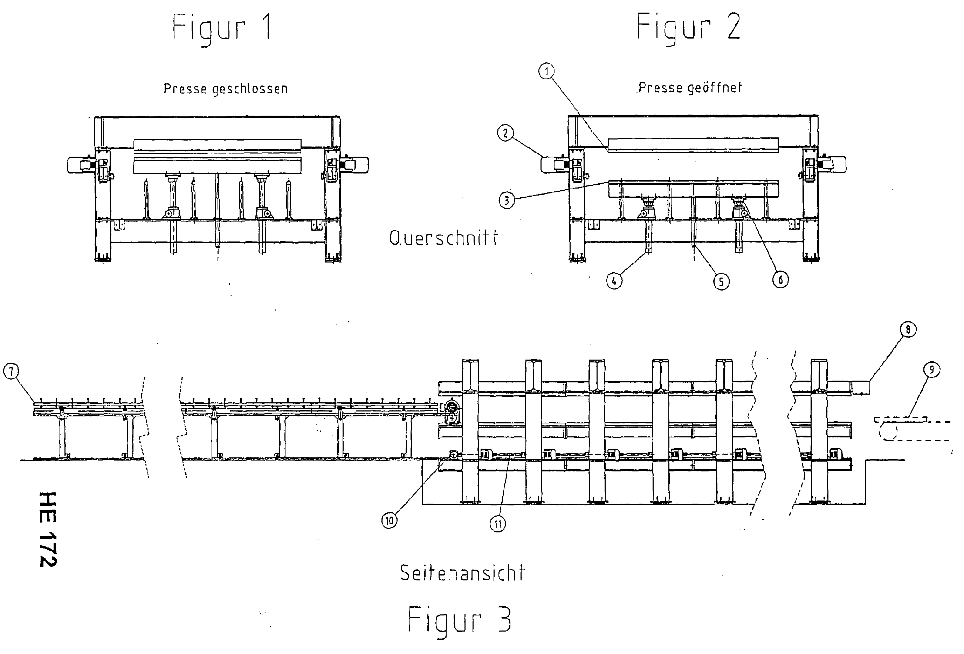

Die Erfindung basiert auf folgendem Grundgedanken, der den folgenden beispielhaften Erläuterungen zu den Figuren 1 bis 3 zugrunde liegt. Der verhältnismäßig niedriggewichtige untere (oder auch obere) Pressentisch (3) (d. h. die bewegliche Pressenplatte) wird mittels Gewindespindeln (4) in die gewünschte Position gefahren. Dabei erfolgt die Bewegung der beweglichen Pressenplatte (3) durch den Einsatz der Gewindespindeln (4) stufenlos. Die Gewindespindeln (4) sind selbsthemmend und mit geringer Antriebsleistung versehen, denn sie werden durch hydraulische Hubzylinder (5) unterstützt. Die Gewindespindeln (4) sind untereinander über ein torsionssteifes Wellensystem (11) und ein Kegelradgetriebesystem (10) miteinander verbunden und somit synchronisiert. Damit lässt sich eine genaue Positionierung der Pressenplatte (3) auch über sehr große Plattenlängen erzielen. Zwischen den Köpfen der Gewindespindeln (4) und der Pressenplatte (3) sind Kurzhubzylinder (6) installiert, die während des Schäumprozesses und dem anschließenden Aushärten der Sandwichplatten ausgefahren sind. Nach Aushärten der Platten werden die Kurzhubzylinder (6) als erste geöffnet, damit die durch den Schäumdruck entstandene Presskraft abgebaut werden kann und die Spindeln (4) ohne ein großes Losbrechmoment zu benötigen, leicht und ohne viel Energieaufwand geöffnet werden können. Den gleichen Vorteil erzielt man, wenn man anstelle der Kurzhubzylinder (6) eine bewegliche Pressenplatte (3) einsetzt, die aus einer ersten und aus einer zweiten Pressenplatte und einem dazwischen angeordneten hydraulisch oder pneumatisch befüllbaren Kissen aufgebaut ist. Dann wird nach Aushärten der Polyurethan-Hartschaumplatten zuerst das Kissen zumindest teilweise entleert, um die durch den Schäumdruck entstandene Presskraft abzubauen. Die Schäumform (9), auch Kassette genannt, hat keinen Einfluss auf die zu erzielende Plattendicke, für jede Plattendicke wird dieselbe Form (9) verwendet. Während die untere Deckschicht mit der Form (9) (Kassette) in die Presse eingebracht wird, wird die obere Deckschicht mit Hilfe des Wagens (7) eingefahren und an die obere Pressenplatte (d.h. die fest angeordnete Pressenplatte) (1) angelegt und festgesaugt. Der hochdynamische Antrieb (2) dient auch dazu, die Form (9) nach einem Ankopplungsprozess in die Presse einzuziehen, die dabei durch den Spritzkopf (8) mit Polyurethan-Schaum gefüllt wird.

Es können in einem durch die Konstruktion der Maschine bestimmten Bereich alle Plattenstärken ohne große Umbauten und Umrüstungen oder Einstellungen hergestellt werden. Die Genauigkeit der Plattenstärke ist sehr hoch, die Synchronisation der Gewindespindeln ist durch ein drehsteifes Wellensystem gewährleistet. Es besteht keine Gefahr menschlicher Bedienungsfehler und damit Beschädigung der Maschine und somit wird der Materialausschuss minimiert und die Produktivität der Maschine erhöht.

## Patentansprüche

1. Presse für Hartschaumplatten enthaltend
einen Rahmen,
eine im Rahmen fest angeordnete Pressenplatte (1) und eine im Rahmen beweglich angeordnete Pressenplatte (3),
mindestens eine Gewindespindel (4), die zwischen der beweglichen Pressenplatte (3) und dem Rahmen angeordnet ist,
**dadurch gekennzeichnet, dass** die Presse weiterhin mindestens einen hydraulisch bewegbaren Hubzylinder (5), der zwischen der beweglichen Pressenplatte (3) und dem Rahmen angeordnet ist,
sowie mindestens einen hydraulisch bewegbaren Kurzhubzylinder (6), der zwischen der beweglichen Pressenplatte (3) und der Gewindespindel (4) angeordnet ist, und dessen Bewegung durch Anschläge begrenzt ist, enthält.

2. Presse für Hartschaumplatten enthaltend
einen Rahmen,
eine im Rahmen fest angeordnete Pressenplatte (1) und eine im Rahmen beweglich angeordnete Pressenplatte (3),
mindestens eine Gewindespindel (4), die zwischen der beweglichen Pressenplatte (3) und dem Rahmen angeordnet ist,
**dadurch gekennzeichnet, dass** die Presse weiterhin mindestens einen hydraulisch bewegbaren Hubzylinder (5), der zwischen der beweglichen Pressenplatte (3) und dem Rahmen angeordnet ist, enthält,
und dass die bewegliche Pressenplatte (3) aus einer ersten und einer zweiten Pressenplatte und einem dazwischen angeordneten pneumatisch oder hydraulisch befüllbaren Kissen aufgebaut ist, wobei die erste und die zweite Pressenplatte gegeneinander bewegbar sind und wobei deren Bewegung durch innere Anschläge begrenzt ist.

3. Verfahren zur Herstellung von Polyurethan-Hartschaumplatten, bei dem man eine Presse gemäß Anspruch 1 einsetzt und bei dem man
a) den Kurzhubzylinder (6) bis zu seinem Anschlag hydraulisch ausfährt und die Gewindespindel (4) und den Hubzylinder (5) in Richtung der fest angeordneten Pressenplatte (1) ausfährt, so dass sich die bewegliche Pressenplatte (3) auf die fest angeordnete Pressenplatte (1) zubewegt, wobei man die Bewegung der Gewindespindel (4) und des Hubzylinders (5) unterbricht, wenn ein vorgegebener Abstand zwischen der fest angeordneten Pressenplatte (1) und der beweglichen Pressenplatte (3) erreicht wird, und anschließend
b) flüssiges Polyurethan-Reaktionsgemisch in eine Form (9) einbringt und die Form (9) zwischen der fest angeordneten Pressenplatte (1) und der beweglichen Pressenplatte (3) anordnet und das flüssige Polyurethan-Reaktionsgemisch aufschäumen und aushärten lässt, und anschließend
c) den Kurzhubzylinder (6) wieder einfährt und anschließend
d) die Gewindespindel (4) und den Hubzylinder (5) wieder zurückbewegt.

4. Verfahren zur Herstellung von Polyurethan-Hartschaumplatten, bei dem man eine Presse gemäß Anspruch 2 einsetzt und bei dem man
a) das Kissen zwischen der ersten und der zweiten Pressenplatte der beweglichen Pressenplatte (3) hydraulisch oder pneumatisch befüllt, so dass sich die erste und die zweite Pressenplatte bis zu den inneren Anschlägen auseinander bewegen und die Gewindespindel (4) und den Hubzylinder (5) in Richtung der fest angeordneten Pressenplatte (1) ausfährt, so dass sich die bewegliche Pressenplatte (3) auf die fest angeordnete Pressenplatte (1) zubewegt, wobei man die Bewegung der Gewindespindel (4) und des Hubzylinders (5) unterbricht, wenn ein vorgegebener Abstand zwischen der fest angeordneten Pressenplatte (1) und der beweglichen Pressenplatte (3) erreicht wird, und anschließend
b) flüssiges Polyurethan-Realctionsgemisch in eine Form (9) einbringt und die Form (9) zwischen der fest angeordneten Pressenplatte (1) und der beweglichen Pressenplatte (3) anordnet und das flüssige Polyurethan-Reaktionsgemisch aufschäumen und aushärten lässt, und anschließend
c) das in Schritt a) hydraulisch oder pneumatisch befüllte Kissen wenigstens teilweise wieder entleert und anschließend
d) die Gewindespindel (4) und den Hubzylinder (5) wieder zurückbewegt.

5. Verfahren nach einem der Ansprüche 3 oder 4, **dadurch gekennzeichnet, dass** das Einbringen des flüssigen Polyurethan-Reaktionsgemisches durch einen Spritzkopf (8) während des Einziehens der Form (9) zwischen die beiden Pressenplatten (1) und (3) erfolgt.

6. Verfahren nach einem der Ansprüche 3 bis 5, bei dem man 50 bis 99 % der für die Bewegung der beweglichen Pressenplatte (3) erforderlichen Leistung durch die Hubzylinder (5) aufbringt.

7. Verfahren nach einem der Ansprüche 3 bis 6, bei dem man in Schritt b) zusätzlich zwei Deckschichten in die Form (9) einbringt, so dass das Polyurethan-Reaktionsgemisch zwischen den beiden Deckschichten angeordnet ist.

## Claims

1. A press for rigid foam sheets containing
a frame,
a press plate (1) arranged stationarily in the frame and a press plate (3) arranged movably in the frame, at least one threaded spindle (4), which is arranged between the mobile press plate (3) and the frame, **characterised in that** the press furthermore contains at least one hydraulically movable lifting cylinder (5), which is arranged between the mobile press plate (3) and the frame,
together with at least one hydraulically movable short-stroke cylinder (6), which is arranged between the mobile press plate (3) and the threaded spindle (4) and the movement of which is limited by limit stops.

2. A press for rigid foam sheets containing
a frame,
a press plate (1) arranged stationarily in the frame and a press plate (3) arranged movably in the frame, at least one threaded spindle (4), which is arranged between the mobile press plate (3) and the frame, **characterised in that** the press furthermore contains at least one hydraulically movable lifting cylinder (5), which is arranged between the mobile press plate (3) and the frame,
and that the mobile press plate (3) comprises a first and a second press plate and, arranged therebetween, a pneumatically or hydraulically fillable cushion, wherein the first and the second press plate are movable towards one another and wherein the movement thereof is limited by internal limit stops.

3. The invention also relates to a process for the production of rigid polyurethane foam panels, in which a press according to claim 1 is used and in which
a) the short-stroke cylinder (6) is hydraulically extended to its limit stop and the threaded spindle (4) and the lifting cylinder (5) are extended in the direction of the stationarily arranged press plate (1), such that the mobile press plate (3) moves towards the stationarily arranged press plate (1), wherein movement of the threaded spindle (4) and of the lifting cylinder (5) is stopped when a predetermined spacing between the stationarily arranged press plate (1) and the mobile press plate (3) is obtained, and then
b) liquid polyurethane reaction mixture is introduced into a mould (9) and the mould (9) is arranged between the stationarily arranged press plate (1) and the mobile press plate (3) and the liquid polyurethane reaction mixture is allowed to foam and cure, and then
c) the short-stroke cylinder (6) is retracted again and then
d) the threaded spindle (4) and the lifting cylinder (5) are moved back again.

4. The invention also relates to a process for the production of rigid polyurethane foam panels, in which a press according to claim 2 is used and in which
a) the cushion between the first and the second press plate of the mobile press plate (3) is filled hydraulically or pneumatically, such that the first and the second press plate move apart to the inner limit stops and the threaded spindle (4) and the lifting cylinder (5) are extended in the direction of the stationarily arranged press plate (1), such that the mobile press plate (3) moves towards stationarily arranged press plate (1), wherein the movement of the threaded spindle (4) and of the lifting cylinder (5) is stopped when a predetermined spacing between the stationarily arranged press plate (1) and the mobile press plate (3) is obtained, and then
b) liquid polyurethane reaction mixture is introduced into a mould (9) and the mould (9) is arranged between the stationarily arranged press plate (1) and the mobile press plate (3) and the liquid polyurethane reaction mixture is allowed to foam and cure, and then
c) the cushion hydraulically or pneumatically filled in step a) is at least partially emptied again and then
d) the threaded spindle (4) and the lifting cylinder (5) are moved back again.

5. A process according to one of claims 3 or 4, **characterised in that** the liquid polyurethane reaction mixture is introduced by an injection head (8) while the mould (9) is being drawn in between the two press plates (1) and (3).

6. A process according to one of claims 3 to 5, in which 50 to 99% of the power required to move the mobile press plate (3) is applied by the lifting cylinders (5) .

7. A process according to one of claims 3 to 6, in which two outer layers are additionally introduced into the mould (9) in step b), such that the polyurethane reaction mixture is arranged between the two outer layers.

## Revendications

1. Presse pour des panneaux en mousse dure contenant
un cadre,
une plaque de presse disposée de manière fixe dans le cadre (1) et une plaque de presse disposée de manière mobile dans le cadre (3),
au moins une broche filetée (4), qui est disposée entre la plaque de presse mobile (3) et le cadre,
**caractérisé en ce que** la presse présente de plus au moins un cylindre de levage pouvant être hydrauliquement déplacé (5), lequel est disposé entre la plaque de presse mobile (3) et le cadre,
ainsi qu'au moins un cylindre de levage à faible course pouvant être hydrauliquement déplacé (6), lequel est disposé entre la plaque de presse mobile (3) et la broche filetée (4), et dont le mouvement est limité par des butées.

2. Presse pour des panneaux en mousse dure contenant
un cadre,
une plaque de presse disposée de manière fixe dans le cadre (1) et une plaque de presse disposée de manière mobile dans le cadre (3),
au moins une broche filetée (4), qui est disposée entre la plaque de presse mobile (3) et le cadre,
**caractérisé en ce que** la presse contient de plus au moins un cylindre de levage pouvant être hydrauliquement déplacé (5), lequel est disposé entre la plaque de presse mobile (3) et le cadre,
et **en ce que** la plaque de presse mobile (3) est construite à partir d'une première et d'une seconde plaques de presse et d'un coussin disposé entre celles-ci pouvant être pneumatiquement ou hydrauliquement rempli, la première et la seconde plaques de presse pouvant être déplacées l'une contre l'autre et dont le mouvement est limité par des butées internes.

3. Procédé pour la préparation de panneaux en mousse dure de polyuréthanne, dans lequel on utilise une presse selon la revendication 1 et dans lequel
a) on déplace hydrauliquement le cylindre de levage à faible course (6) jusqu'à sa butée et on déplace la broche filetée (4) et le cylindre de levage (5) dans la direction de la plaque de presse disposée de manière fixe (1), de telle sorte que la plaque de presse mobile (3) est déplacée jusqu'à la plaque de presse disposée de manière fixe (1), le mouvement de la broche filetée (4) et du cylindre de levage (5) étant interrompu lorsque l'on atteint un écartement prédéterminé entre la plaque de presse disposée de manière fixe (1) et la plaque de presse mobile (3), et
b) on introduit ensuite dans un moule (9) un mélange réactionnel liquide de polyuréthanne et on dispose le moule (9) entre la plaque de presse disposée de manière fixe (1) et la plaque de presse mobile (3) et on laisse mousser et durcir le mélange réactionnel liquide de polyuréthanne, et
c) on insère ensuite à nouveau le cylindre de levage à faible course (6) et
d) on déplace ensuite à nouveau en arrière la broche filetée (4) et le cylindre de levage (5).

4. Procédé pour la préparation de panneaux en mousse dure de polyuréthanne, dans lequel on utilise une presse selon la revendication 2 et dans lequel
a) on remplit hydrauliquement ou pneumatiquement le coussin entre la première et la seconde plaques de presse de la plaque de presse mobile (3) de telle sorte que la première et la seconde plaques de presse sont déplacées en se séparant l'une de l'autre jusqu'aux butées internes et on déplace la broche filetée (4) et le cylindre de levage (5) jusque sur la plaque de presse disposée de manière fixe (1), de telle sorte que la plaque de presse mobile (3) est déplacée sur la plaque de presse disposée de manière fixe (1), le mouvement de la broche filetée (4) et du cylindre de levage (5) étant interrompu lorsque l'on atteint un écartement prédéterminé entre la plaque de presse disposée de manière fixe (1) et la plaque de presse mobile (3), et
b) on introduit ensuite dans un moule (9) un mélange réactionnel liquide de polyuréthanne et on dispose le moule (9) entre la plaque de presse disposée de manière fixe (1) et la plaque de presse mobile (3) et on laisse mousser et durcir le mélange réactionnel liquide de polyuréthanne, et
c) on vide ensuite à nouveau au moins partiellement le coussin rempli hydrauliquement ou pneumatiquement dans l'étape a) et
d) on déplace ensuite à nouveau en arrière la broche filetée (4) et le cylindre de levage (5).

5. Procédé selon l'une quelconque des revendications 3 ou 4, **caractérisé en ce que** l'on réalise l'introduction du mélange réactionnel liquide de polyuréthanne par l'intermédiaire d'une tête d'injection (8) pendant la rentrée du moule (9) entre les deux plaques de presse (1) et (3).

6. Procédé selon l'une quelconque des revendications 3 à 5, dans lequel on applique de 50 à 99 % de la puissance nécessaire pour le déplacement de la plaque de presse mobile (3) par l'intermédiaire du cylindre de levage (5).

7. Procédé selon l'une quelconque des revendications 3 à 6, dans lequel on introduit en plus dans l'étape (b) deux couches de couverture dans le moule (9), de telle sorte que le mélange réactionnel de polyuréthanne est disposé entre les deux couches de couverture.
